# EUROPEAN PATENT SPECIFICATION

(11) **EP 1 502 395 B1**
(45) Date of publication and mention of the grant of the patent: **16.07.2008**
(21) Application number: 03736486.6
(22) Date of filing: 24.04.2003
(51) Int. Cl.: H04L 12/28

(54) **TRAFFIC NETWORK FLOW CONTROL USING DYNAMICALLY MODIFIED METRICS FOR REDUNDANCY CONNECTIONS**
VERKEHRSNETZWERKFLUSSTEUERUNG UNTER VERWENDUNG DYNAMISCH MODIFIZIERTER METRIKEN FÜR REDUNDANZVERBINDUNGEN
COMMANDE DE FLUX DE RESEAU DE TRAFIC UTILISANT DES PARAMETRES MODIFIES DYNAMIQUEMENT POUR DES CONNEXIONS REDONDANTES

(30) Priority: 25.04.2002 US 132905
(43) Date of publication of application: 02.02.2005
(73) Proprietor: GENERAL INSTRUMENT CORPORATION, Horsham, Pennsylvania 19044 (US)
(72) Inventor: PATRICK, Michael, W., Assonet, MA 02702 (US); GUO, Junjing, Foxboro, MA 02035 (US); FOLEY, Stephen, A., Noreth Attleboro, MA 02760 (US)
(74) Representative: McLeish, Nicholas Alistair Maxwell
(86) International application number: PCT/US2003/012752
(87) International publication number: WO 2003/091846

(56) References cited:
- US-A- 5 748 611
- US-A- 5 835 696
- US-A- 5 845 091
- US-A- 5 935 215
- US-A1- 2002 042 274
- YUCEBAY R: "ROUTING INFORMATION PROTOCOL WITH BACKUP ROUTER RECOVERY" MOTOROLA TECHNICAL DEVELOPMENTS, MOTOROLA INC. SCHAUMBURG, ILLINOIS, US, vol. 32, September 1997 (1997-09), pages 188-189, XP000741182 ISSN: 0887-5286

## Description

### FIELD OF THE INVENTION

The present invention relates generally to methods and apparatuses for transmitting data between routers and more particularly to a method and apparatus for transmitting data between two routers using Internet Protocols.

### BACKGROUND

Routing Information Protocol (RIP) is historically the most widely used Internet routing protocol due to its early implementation and relatively simple configuration. RIP is one of the most enduring of all routing protocols. RIP and the myriad RIP-like protocols were based on a set of algorithms that use distance vectors to mathematically compare routes to identify the best path to any given destination address. These algorithms emerged from academic research that dates back to 1957.

RIP sends routing-update messages at regular intervals and when the network topology changes. When a router receives a routing update that includes changes to an entry, it updates its routing table to reflect the new route. RIP routers typically maintain only the best route (the route with the lowest metric value) to a destination. After updating its routing table, the router immediately begins transmitting routing updates to inform other network routers of the change. The learned route is re-advertised on other interfaces with the "metric" of the route increased by one (1), indicating that one additional router "hop" should be counted when accessing that destination network. With the "triggered" variation of RIP, these updates are sent independently of the regularly scheduled updates that RIP routers send every 30 seconds.

RIP uses a single routing metric (hop count) to measure the distance between the source and a destination network. Each hop in a path from source to destination is assigned a hop count value, which is typically one (1). When a router receives a routing update that contains a new or changed destination network entry, the router adds one (1) to the metric value indicated in the update and enters the network in the routing table. The IP address of the sender is used as the next hop.

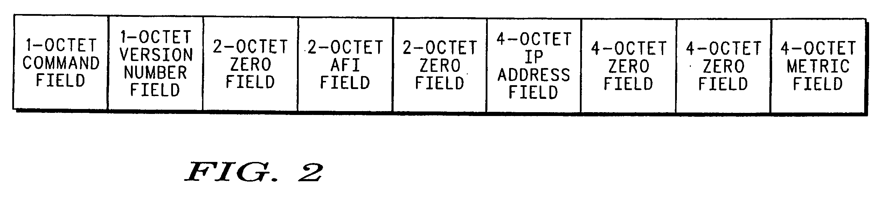

Referring to FIG 2, shown therein is the IP RIP packet format, which consists of nine fields. The following descriptions summarize the IP RIP packet format fields illustrated in FIG 2.

Command-Indicates whether the packet is a request or a response. The request asks that a router send all or part of its routing table. The response can be an unsolicited regular routing update or a reply to a request. Responses contain routing table entries. Multiple RIP packets are used to convey information from large routing tables.

Version number-Specifies the RIP version used. This field can signal different potentially incompatible versions.

Zero-This field is not actually used by RFC 1058 RIP; it was added solely to provide backward compatibility with pre-standard varieties of RIP. Its name comes from its defaulted value: zero.

Address-family identifier (AFI)-Specifies the address family used. RIP is designed to carry routing information for several different protocols. Each entry has an address-family identifier to indicate the type of address being specified. The AFI for IP is two (2).

Address-Specifies the IP address for the entry.

Metric-Indicates how many internetwork hops (routers) have been traversed in the trip to the destination. This value is between one (1) and fifteen (15) for a valid route, or sixteen (16) for an unreachable route.

Up to twenty-five (25) occurrences of the AFI, Address, and Metric fields fit in a single maximum-size 1500 byte IP RIP packet transmitted on an Ethernet network. Up to twenty-five (25) destinations can be listed in a single RIP packet.

Triggered RIP (as opposed to demand RIP) refers to a protocol version of RIP that transmits triggered updates rather than periodic broadcasts. Triggered RIP shares the same basic algorithms as RIP or RIP-2 when running on Local Area Networks (LANs). Packet formats, broadcast frequency, triggered update operation and database timeouts are all similar. Updates are only sent when an event changes the routing database. Each update is retransmitted until acknowledged. Information received in an update is not timed out. The packet format of a RIP response is modified (with a different unique command field) to include sequence number information. An acknowledgement packet is also defined.

RIP Version 2 "RIPv2" [RFC 1388] extends RIP primarily by adding the advertisement of an IP subnet mask in addition to the IP subnet address. It also adds options for authorizing RIPv2 packets, advertising a different next hop router than the sender of the RIPv2 packet, and using IP Multicast rather than broadcast advertisements.

Conventional RIP used by Internet routers can take up to three minutes to recognize that a network is no longer reachable because a router sending a RIP advertisement has failed or that one of two redundant paths between two routers is no longer available. This is because RIP advertisements are specified by default to be made only every thirty (30) seconds, and most implementations require a total of six advertisements to be lost before declaring that the previously reachable network is unreachable. Data will be forwarded towards a failed connection for the entire duration. This presents a serious deficiency with the use of RIP for high-availability IP traffic such as Voice Over IP. Another problem with existing RIP implementations is that implementations receiving the same-cost route from two different routers will select only one such router as the "next hop", and when the selected next hop router stops advertising, will still wait three minutes before accepting the same-cost route from a different router.

This long topology change detection time was one of the principal motivators for the industry to develop "link state" routing protocols such as OSPF [RFC 1247], IS-IS [RFC 1142] and BGP [RFC 1771]. Such protocols, while providing quicker router and link failure detection times, are much more complicated to implement and configure correctly.

The present invention is therefore directed to the problem of developing a method and apparatus for reacting quickly to a failure or loss of "reachability" in connection that has a redundant or backup connection.
Document US 2002/042274 discloses methods for forming a network of nodes from a plurality of nodes and a plurality of potential transmission links between respective nodes, including a method for adapting an initial mesh communication network configuration to a final mesh communications network configuration.

### SUMMARY OF THE INVENTION

There is provided a method for routing traffic between nodes in a network as set out in claim 1.

The present invention solves these and other problems by *inter alia* modifying the advertised hop count upon detecting a failure in a connection for which a backup or redundant connection exists so that traffic automatically gets diverted to the redundant or backup connection.

According to one exemplary embodiment of the present invention, an artificially high hop count is advertised for a given port, and when a failure or loss of reachability occurs in a connection associated with that port, an advertisement of a lower hop count for the backup or redundant connection for the given port is triggered, which causes rerouting of traffic to the backup or redundant connection in an automatic manner. This can occur with or without modifying the hop count associated with the unreachable port.

According to another exemplary embodiment, multiple states of artificially high hop counts are used when policy based routing techniques are being employed. This enables satisfaction of both the policy based routing goals as well as the triggering of a lower advertised hop count for those backup or redundant routes to reroute traffic to avoid the failed or unreachable link or connection.

### BRIEF DESCRIPTION OF THE DRAWINGS

FIG 1 depicts a block diagram of a system to which various aspects of the present invention are applicable.

FIG 2 depicts a packet format of an RIP data packet.

FIG 3 depicts an exemplary embodiment of a process for operating an access router according to one aspect of the present invention.

### DETAILED DESCRIPTION

It is worthy to note that any reference herein to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

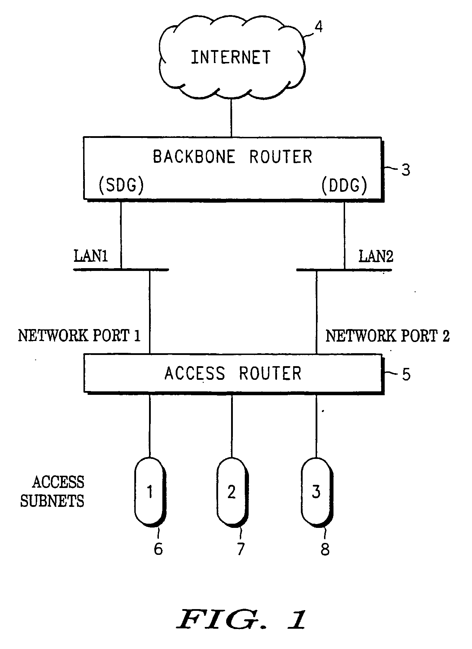

FIG 1 illustrates a block diagram of a system to which various aspects of the present invention are applicable. A backbone router 3 connecting to the Internet 4 employs redundant connections via Local Area Net (LAN) LAN 1 and LAN 2 to an access router 5. The access router 5 implements access for individual Internet subscribers accessing the Internet, e.g., through cable, digital subscriber loop (DSL) or dial-up connections, such as via dial-up modems

The access router 5 implements logical IP subnets on its subscriber access side (called "access subnets 6-8" in this document). All subscribers are assigned IP addresses within an access subnet. The access router 5 advertises reachability to these access subnets via the Routing Information Protocol (RIP). This invention applies to both RIP version 1 and version 2.

IP traffic going up from access subnets to the Internet is called "upstream" traffic, and traffic going from the Internet to access subnets is called "downstream" traffic in this document.

Note that LAN1 and LAN2 are typically implemented by layer 2 switches or Ethernet passive hubs, so that there is no direct cable connecting the Access Router to the Backbone Router. Thus, the Backbone router will not be able to use simple link loss conditions to determine that the forwarding path through LAN1 to the Access router is still available. For example, when the cable from the LAN1 switch to the Access router is disconnected, the cable link from the Backbone router to LAN1 is still intact, and the Backbone Router will not be able to trigger any change in downstream routing to the Access Router to LAN1. It will still forward downstream packet to the LAN1 switch, which will drop it because the cable to the Access router is disconnected. The links between the Access Router and the Backbone across LAN1 and LAN2 are termed "redundant" links because they are diverse paths to a common network, called the "Internet" in FIG 1.

When RIP is used conventionally with redundant connections, such as shown in FIG 1, the access router advertises the same "hop count" for its access subnets on both LAN 1 and LAN 2. The backbone router is free to use either LAN to forward packets destined "downstream" to subscriber hosts within the access subnets.

The problem with conventional usage, however, occurs when one of the redundant connections fails. For example, LAN 1 may be implemented with a layer 2 switch/hub and the cable between the LAN 1 hub and the access router may be disconnected. In this condition, the backbone router will still continue to send downstream traffic to LAN 1 until it recognizes that RIP advertisements are no longer coming from LAN 1 of the access router with default RIP implementations. This recognition takes up to six intervals of a 30-seond broadcast interval or up to three minutes. This is far too long for high-availability access router implementations, e.g., those used to provide Voice-over-IP (VoIP) services.

The long times taken by RIP to recognize topology changes is a well-known problem in the industry, and other routing protocols, such as OSPF and IBGP, have been developed to address this problem. However, such protocols require significantly more configuration then RIP and are recognized as generally harder to use and maintain than RIP.

RFC 2091 "Triggered Extensions to RIP to Support Demand Circuits" introduced the concept of "triggered" RIP to more quickly propagate knowledge of new connections, but the RFC does not address the problem of rapidly reconfiguring to use a redundant link when a primary link fails.

According to one aspect of the present invention, an access router advertising via RIP on redundant links advertises an artificially higher RIP cost or metric for its reachable IP subnets. For example, the directly reachable "access subnets" from the access router are advertised with a hop count of two hops rather than the usual one hop. When one of the redundant links upstream from the access router fails, this condition triggers an RIP advertisement with a "better" route (e.g., a hop count of one) on the remaining link. This causes the upstream router to immediately route downstream data to the remaining link.

While various values are used to represent the hop count, these values are not the only ones that may be used. Moreover, the differences between the values are not necessarily limited to those shown herein. In general, the hop count is set artificially high to a value of "*n*". Then, when a given port becomes unreachable (as defined below), the redundant port's hop count is advertised as "*n*-δ", which is a change from n. Typically, these values (n, δ) are integers, but the invention does not necessarily require this, however, some protocols may limit these values to integers.

When the failed link is restored, there is no need to immediately restore the balance of traffic between the two redundant links, so regular RIP advertisements can be used.

According to another aspect of the present invention, this technique can be applied when policy-based routing is being employed. However, there are a number of subtleties involved when policy-based routing is used to distribute the IP traffic load across the redundant links. In this case, the hop count advertisements vary depending upon whether the particular port is a preferred port or not. So, when establishing an artificially high hop count, an additional state must be established to differentiate between a preferred port, a default port and a redundant port. These differences are set forth in the chart below. Using the generalized notation above, in the normal state the hop count is advertised as n for the preferred port and "m" for the non-preferred ports. Upon detection that a port is not reachable, the preferred redundant port is set to *n-δ* whereas the non-preferred redundant port is set to something higher but less than *m.*

The various embodiments set forth herein are applicable *inter alia* to Motorola's DOCSIS cable routers. The various embodiments may also be applicable to other cable routers as well.

The Triggered RIP on redundant links invention solves the problem of rapidly re-routing downstream traffic through a reachable LAN by two steps. First, Triggered RIP on Redundant links changes RIP advertisement hop counts for access subnets on the remaining network port when one network port goes down. Second, even if an access router LAN port remains up, the access router quickly detects a "reachability" failure to its next hop router and upon doing so, it immediately sends triggered RIP advertisements to the other reachable next hop routers to redirect downstream traffic.

As used herein, a backbone router's next hop may be considered "reachable" when it:
advertises ICMP router discovery packets in a timely manner;
responds to pings or ARPs from the access router, and/or
forwards data to the access router.

With this invention, the hop counts in the RIP advertisement is determined by three factors: network port reachability, next hop router reachability, and access subnets source default route changes.

Each access subnet can be configured with a "Source Default Gateway" (abbreviated SDG herein), which is a policy routing mechanism that defines the default next hop when forwarding any packet originating from the access subnet. IP source default routing is used instead of the usual choice to deliver the packet to its destination via the access router's Destination Default Gateway (abbreviated DDG herein). More specifically, when an access subnet's SDG is defined on the access router network port, reachable upstream and downstream traffic should go over the port that SDG is set on. When the SDG goes down, upstream and downstream traffic should switch to the DDG port if it is configured and reachable. If an access subnet's SDG is not on the access router network port, it will be treated as if the SDG is not defined. The following table summarizes the RIP advertisement hop counts sent on any port P for the access subnets. A next hop router address such as SDG and DDG is considered to be "reachable" when ICMP router discovery packets have been received from it, or the router responds to Ping or Arp requests. A network port P is considered to be reachable when the next hop routers of all learned routes on the network are reachable.

| All Ports reachable | SDG defined | SDG reachable | DDG defined | DDG reachable | P is preferred port | P is default port | P is reachable | Advertise dd RIP hop count |
|---|---|---|---|---|---|---|---|---|
| 1. T | F | X | X | X | X | X | T | 3 |
| 2. F | F | X | X | X | X | X | T | 1 |
| 3. F | X | X | X | X | X | X | F | 3 |
| 4. X | T | T | X | X | T | X | T | 2 |
| 5. X | T | T | X | X | F | X | T | 3 |
| 6. X | T | F | F | X | F | X | T | 1 |
| 7. X | T | F | T | X | X | T | T | 1 |
| 8. X | T | F | T | T | X | F | T | 3 |

In the first row, the case is represented in which all ports are reachable, but there is no SDG defined, and so the preferred port P is reachable. In this case, the advertised RIP hop count is set to three (3) for the preferred port P.

In the second row, the same case as row one is represented, however, now there are some ports that are not reachable, i.e., an error or failure in one port/link has occurred, but the preferred port P remains reachable. In this case, the advertised RIP hop count is set to one (1) for the preferred port P. This ensures that downstream traffic is sent across the preferred port P.

In the third row, the case is represented in which the port P is not reachable. In this case, the advertised RIP hop count is set to three (3). This is the general case for when a port is unreachable. Thus, when a port is unreachable, the advertised RIP hop count for that port is set to three, whether or not there is an SDG or DDG defined on that port

In the fourth row, the case is represented in which there is an SDG defined and it is reachable and the preferred port P is reachable. In this case, the advertised RIP hop count is set to two (2) for preferred port P. This is true whether or not there is a DDG defined and reachable. This ensures that the Backbone router forward downstream traffic to a particular access subnet over the same preferred port P on which the Access Router forwards upstream traffic from that access subnet.

The fifth row represents the same case as row four, except that port P is not the preferred port but port P is reachable. In this case, the advertised RIP hop count is set to three (3) for all reachable non-preferred ports. Thus, the preferred port P is set to two (case in row 4) whereas the non-preferred ports are set to three, thereby ensuring a preference of the preferred port over the non-preferred ports for downstream traffic

The sixth row represents the case of row four, except that now the SDG is not reachable and there is no DDG defined. Now P is not the preferred port, but P is reachable. In this case, the advertised RIP hop count is set to one (1). This ensures traffic flows over the non-preferred port P rather than the preferred port, which has failed.

The seventh row represents the same case as row six, but now the DDG is defined. All default ports that are reachable will then be set to an advertised hop count of one (1). This is provided for predictability and symmetry in the case when the SDG is not reachable. In this case, upstream traffic from a network with an SDG will be routed to the DDG port instead, and the seventh row provided that downstream traffic traverses the same port.

The eighth row represents the same case as row seven, but shows that all non-default ports that are reachable are set to an advertised hop count of three (3). In combination with row seven, this ensures that traffic is sent over the default ports rather than the non-default ports when the SDG becomes non-reachable.

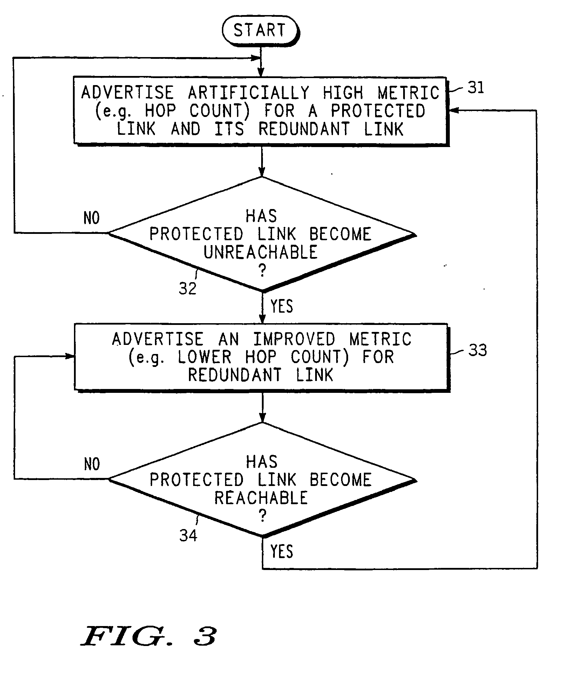

FIG 3 shows an exemplary embodiment of a process for operating an access router or other routing apparatus according to one aspect of the present invention. Once the router has begun operating in its normal state, the router advertises an artificially high metric (e.g., hop count) for a given protected connection and its redundant link (step 31). These artificially high metrics (e.g., hop counts) are higher than the actual metrics (e.g., internetwork hops, respectively) associated with the protected connection. The router then continuously monitors the reachability of the protected link (step 32). If the protected link becomes unreachable, the router then improves the metric advertised for the redundant link (e.g., reduces the advertised hop count) (step 33), assuming the redundant link is available. Obviously, if no redundant link is available, more drastic measures need to be implemented. However, assuming there remains at least one redundant link available and reachable, the router improves the advertised metric (e.g., reduces the advertised hop count) for this redundant link. The router may continue to monitor the protected link's reachability (step 34). If the protected link becomes reachable, the router may then modify the advertised metric (e.g., link hop count) to the artificially high value for the protected link and the redundant link. This last step is optional, in that there is no need to switch traffic back to the protected link in any particular hurry. Of course, if desired, the metric for the protected link could be advertised to be better than the redundant link, thereby ensuring rapid reconfiguration to the original configuration, which may improve the predictability of the network, thereby improving the ease with which these various failure mechanisms can be tested.

While hop count is specifically used as one of the metrics envisioned herein, other metrics can be employed as traffic flow control in accordance with the techniques described herein. Some of these include cost, delay, link throughput, and link loading.

In general, the embodiments of the present invention provide that an improved metric is advertised for a redundant link during a non-reachable state of the link for which the redundant link is redundant or backup (i.e., the protected link) relative to the metric advertised during a normal state of the protected link In other words, the state of the protected link controls the advertised metric for the redundant link. In a non-reachable or failed state of the protected link, the redundant link has a better metric advertised for it than during a normal or Teachable state of the protected link. Thus, the advertised metric of the redundant link is dynamically modified as the protected link's state changes.

Although various embodiments are specifically illustrated and described herein, it will be appreciated that modifications and variations of the invention are covered by the above teachings and are within the purview of the appended claims without departing from the - intended scope of the invention. Furthermore, these examples should not be interpreted to limit the modifications and variations of the invention covered by the claims but are merely illustrative of possible variations.

## Claims

1. A method for routing traffic between nodes in a network having a preferred link (LAN1) through which communications are carried between the nodes and a redundant link (LAN2) which provides an alternative path to carry the communications between the nodes, a link for communication being determined based on routing metrics associated with each of the preferred link and the redundant link, the routing metrics indicate a path which uses the least resources to complete the communications between the nodes, the method **characterised in that** it comprises the steps of:
advertising, from an access router (5) to other routers (3) in the network, an artificially high metric for the preferred link (LAN1) and redundant link (LAN2) in the network, when the preferred link (LAN1) and redundant link (LAN2) are in a reachable state; and
advertising, from an access router (5) to other routers (3) in the network, a lower metric for the redundant link (LAN2), causing other routers (3) in the network to direct communications between the nodes through the redundant link (LAN2) when the preferred link (LAN1) is determined not to be reachable.

2. The method according to claim 1, wherein the artificially high metric includes a first value for a number of internetwork hops associated with the redundant link (LAN2), and the first value is a higher number of internetwork hops than an actual number of internetwork hops associated with the redundant link (LAN2).

3. The method according to claim 2, wherein the lower metric includes a second value for the number of internetwork hops associated with the redundant link (LAN2), and the second value is a lower number of internetwork hops than the first value associated with the redundant link (LAN2).

4. The method of any of claims 1 to 3, further comprising the step of:
re-advertising, from the access router (5) to the other routers (3) in the network, the artificially high metric for the redundant link (LAN2) when the preferred link (LAN1) is determined to be reachable again.

## Patentansprüche

1. Verfahren zum Routing von Verkehr zwischen Knoten in einem Netzwerk, das eine bevorzugte Verbindung (LAN1) aufweist, durch welche Kommunikationen zwischen den Knoten übertragen werden, und eine redundante Verbindung (LAN2) aufweist, welche einen alternativen Pfad zum Übertragen der Kommunikationen zwischen den Knoten bereitstellt, wobei
eine Verbindung für Kommunikation basierend auf Routing-Metriken bestimmt wird, welche sowohl der bevorzugten Verbindung als auch der redundanten Verbindung zugeordnet ist, wobei die Routing-Metriken einen Pfad anzeigen, welcher die geringsten Ressourcen verwendet, um die Kommunikationen zwischen den Knoten zu vervollständigen, wobei das Verfahren **dadurch gekennzeichnet ist, dass** es die folgenden Schritte umfasst:
Mitteilen einer künstlich hohen Metrik für die bevorzugte Verbindung (LAN1) und die redundante Verbindung (LAN2) in dem Netzwerk von einem Zugangsrouter (5) an andere Router (3) in dem Netzwerk, wenn die bevorzugte Verbindung (LAN1) und die redundante Verbindung (LAN2) in einem erreichbaren Zustand sind; und
Mitteilen einer niedrigeren Metrik für die redundante Verbindung (LAN2) von einem Zugangsrouter (5) an andere Router (3) in dem Netzwerk, die dafür sorgt, dass die anderen Router (3) in dem Netzwerk die Kommunikationen zwischen den Knoten durch die redundante Verbindung (LAN2) leiten, wenn bestimmt wird, dass die bevorzugte Verbindung (LAN1) nicht erreichbar ist.

2. Verfahren nach Anspruch 1, wobei die künstlich hohe Metrik einen ersten Wert für eine Zahl von Zwischennetzwerksprüngen umfasst, der der redundanten Verbindung (LAN2) zugeordnet ist, und wobei der erste Wert eine höhere Anzahl an Zwischennetzwerksprüngen als eine tatsächliche Zahl von Zwischennetzwerksprüngen ist, die der redundanten Verbindung (LAN2) zugeordnet ist.

3. Verfahren nach Anspruch 2, wobei die niedrigere Metrik einen zweiten Wert für die Zahl von Zwischennetzwerksprüngen umfasst, der der redundanten Verbindung (LAN2) zugeordnet ist, und wobei der zweite Wert eine niedrigere Anzahl an Zwischennetzwerksprüngen ist als der erste Wert, der der redundanten Verbindung (LAN2) zugeordnet ist.

4. Verfahren nach einem der Ansprüche 1 bis 3, ferner umfassend den Schritt: Erneutes Mitteilen der künstlich hohen Metrik für die redundante Verbindung (LAN2) von dem Zugangsrouter (5) an die anderen Router (3) in dem Netzwerk, wenn bestimmt wird, dass die bevorzugte Verbindung (LAN1) wieder erreichbar ist.

## Revendications

1. Procédé de routage de trafic entre des noeuds, dans un réseau possédant une liaison préférée (LAN1) par laquelle les communications sont transportées entre les noeuds et une liaison redondante (LAN2) fournissant un chemin alternatif pour transporter les communications entre les noeuds, une liaison à utiliser pour la communication étant déterminée sur la base de données métriques de routage associées à chacune des liaisons préférée et redondante, les données métriques de routage indiquant un chemin qui consomme le moins de ressources pour réaliser les communications entre les noeuds, le procédé étant **caractérisé en ce qu'**il comprend les étapes consistant à :
publier par un routeur d'accès (5), en direction d'autres routeurs (3) sur le réseau, des données métriques artificiellement élevées pour la liaison préférée (LAN1) et la liaison redondante (LAN2) sur le réseau, lorsque la liaison préférée (LAN1) et la liaison redondante (LAN2) sont dans un état accessible ; et
publier par un routeur d'accès (5), en direction d'autres routeurs (3) sur le réseau, des données métriques inférieures pour la liaison redondante (LAN2), ce qui amène d'autres routeurs (3) sur le réseau à diriger les communications entre les noeuds sur la liaison redondante (LAN2) lorsqu'il est déterminé que la liaison préférée (LAN1) n'est pas accessible.

2. Procédé selon la revendication 1, dans lequel les données métriques artificiellement élevées comprennent une première valeur pour un nombre de bonds d'interconnexion de réseaux associés à la liaison redondante (LAN2) et la première valeur est un nombre de bonds d'interconnexion de réseaux qui est supérieur au nombre réel des bonds d'interconnexion de réseaux associé à la liaison redondante (LAN2).

3. Procédé selon la revendication 2, dans lequel les données métriques inférieures comprennent une seconde valeur pour le nombre des bonds d'interconnexion de réseaux associés à la liaison redondante (LAN2) et la seconde valeur est un nombre de bonds d'interconnexion de réseaux qui est inférieur à la première valeur associée à la liaison redondante (LAN2).

4. Procédé selon l'une quelconque des revendications 1 à 3, comprenant en outre l'étape consistant à :
republier par le routeur d'accès (5), en direction des autres routeurs (3) du réseau, les données métriques artificiellement élevées pour la liaison redondante (LAN2) lorsqu'il est déterminé que la liaison préférée (LAN1) est à nouveau accessible.
